# EUROPÄISCHE PATENTSCHRIFT

(11) **EP 3 599 142 B1**
(45) Veröffentlichungstag und Bekanntmachung des Hinweises auf die Patenterteilung: **13.10.2021**
(21) Anmeldenummer: 19153377.7
(22) Anmeldetag: 23.01.2019
(51) Int. Cl.: B62B 3/18

(54) **ROLLBEHÄLTER**
ROLLER CONTAINER
CONTENEUR ROULANT

(30) Priorität: 23.07.2018 DE 202018104227 U
(43) Veröffentlichungstag der Anmeldung: 29.01.2020
(73) Patentinhaber: FEIL rolltainer GmbH, 59602 Rüthen (DE)
(72) Erfinder: SCHMIDT, Eckhart, 33100 Paderborn (DE)
(74) Vertreter: Andrejewski - Honke Patent- und Rechtsanwälte Partnerschaft mbB

(56) Entgegenhaltungen:
- EP-A1- 2 597 011
- WO-A1-98/24699
- DE-B3-102004 059 245
- DE-U1- 8 517 521
- DE-U1- 9 016 518
- DE-U1-202014 105 450

## Beschreibung

Die Erfindung betrifft einen Rollbehälter, insbesondere einen Rollcontainer, mit einer auf drehbaren Rollen gelagerten U-förmigen Basis mit U-Schenkeln, ferner mit einem auf der Basis angeordneten Gitterwandgestell aus zumindest zwei sich gegenüberliegenden sowie um jeweils eine im Wesentlichen vertikale Achse schwenkbaren Seitenwänden, und mit einer um eine größtenteils horizontale Schwenkachse klappbaren Bodenplatte, wobei die Bodenplatte gegen Federkraft in eine größtenteils horizontale Gebrauchslage oberhalb der Basis sowie durch Federkraft in eine größtenteils aufrechte Nestlage schwenkbar ausgebildet ist. - Die U-förmige Basis ist überwiegend horizontal orientiert. Auf der Basis steht das Gitterwandgestell größtenteils vertikal auf. Die Nestlage der Bodenplatte korrespondiert zu ihrer überwiegend senkrechten Ausrichtung.

Rollbehälter und insbesondere zusammenfahrbare Rollbehälter sind seit langem bekannt, wie beispielhaft die DE 1 994 644 U der Anmelderin belegt. Hier geht es um einen zusammenfahrbaren Rollbehälter mit einer hochklappbaren Ladeplatte. Die Ladeplatte ist an einem Seitenteil angelenkt und über einen oder mehrere Gelenkhebel mit dem gegenüberliegenden Seitenteil verbunden. Beim Hochschwenken der Ladeplatte werden die Seitenteile parallel zueinander zusammengefahren.

Rollbehälter und insbesondere Rollcontainer bezeichnen rollbare Transportgestelle, die zur Aufnahme, Lagerung und Transport von Gegenständen eingesetzt werden, beispielsweise in der Lebensmittelindustrie. In der Regel verfügen die Rollbehälter bzw. Rollcontainer typischerweise über einen Boden und wenigstens zwei Seitenwände. Zur Reduzierung des Gewichtes handelt es sich bei den Seitenwänden meistens um Gitterwände und diese definieren insgesamt das zuvor bereits beschriebene Gitterwandgestell.

Mit Hilfe der an der Basis vorgesehenen drehbaren Rollen kann der Rollbehälter leicht verfahren werden. Dazu mögen insgesamt vier Rollen vorgesehen werden. Beispielsweise können zwei Rollen als feststehende Bockrollen und zwei weitere Rollen als Lenkrollen ausgebildet sein. Es ist aber auch möglich, auf insgesamt vier Lenkrollen zurückzugreifen.

Der Boden und die Seitenwände sind im Allgemeinen aus Metall bzw. einem Metallgeflecht hergestellt, um eine einfache Reinigung zu ermöglichen und zugleich das Gewicht niedrig zu halten. Außerdem verfügen solche Metallgeflechte bzw. Gitterwandgestelle über eine hohe Stabilität, sodass die beschriebenen Rollcontainer insbesondere im Lager- bzw. Logistikbereich eingesetzt werden können.

Da leere Rollcontainer einen hohen Platzbedarf aufweisen, werden heutzutage oftmals Lösungen verfolgt, bei denen die Rollbehälter insgesamt in eine sogenannte Nestlage überführt werden können. In dieser Nestlage ist der Boden bzw. die Bodenplatte größtenteils aufrecht hochgeschwenkt. Hierfür sorgt eine Feder. Die Nestlage wird ohne zusätzliche Beaufschlagung des Bodens regelmäßig eingenommen, eben durch die Kraft der Feder.

In dieser Nestlage können mehrere Rollbehälter ineinandergeschoben werden. Zu diesem Zweck ist die U-förmige Basis mit ihren beiden U-Schenkeln als sogenannter A-Frame ausgebildet. Das heißt, die beiden U-Schenkel verlaufen schräg zur Basis. Auf diese Weise können die um jeweils ihre vertikale Achse schwenkbaren Seitenwände bei hochgeschwenkter Bodenplatte an die schrägen U-Schenkel angelegt werden und lassen sich die einzelnen leeren Rollbehälter ineinanderschieben bzw. "nesten". Das ist im Detail beispielhaft in der EP 2 597 011 A1 beschrieben.

Sobald die Bodenplatte in ihre größtenteils horizontale Gebrauchslage oberhalb der Basis gegen die Federkraft geschwenkt wird, werden die beiden an den schrägen U-Schenkeln anliegenden Seitenwände auseinandergefahren und in der Gebrauchslage mit Hilfe der horizontal angeordneten Bodenplatte gehalten. Zusätzliche Ausleger können dafür sorgen, dass die betreffenden Seitenwände in der Gebrauchslage lösbar an der Basis fixiert werden. Sobald in der Gebrauchslage Waren oder Gegenstände auf der Bodenplatte abgestellt werden, kann diese nicht mehr selbsttätig durch die Federkraft in ihre aufrechte Nestlage verschwenken.

Beim gattungsbildenden Stand der Technik nach der DE 20 2014 105 450 U1 sorgt eine spezielle Torsionsfeder dafür, dass die Bodenplatte mit der bereits angesprochenen Federkraft beaufschlagt wird. Dazu ist die Torsionsfeder spiralförmig um eine Schwenkstange herumgewunden. Das hat sich grundsätzlich bewährt.

Im Rahmen der WO 98/24699 A1 wird ein Rollbehälter beschrieben, welcher mit 2 Paaren an schwenkbaren Verbindungsstangen zwischen den U-Schenkeln seiner Seitenwände ausgerüstet ist. Dadurch wird insgesamt in eingeschwenktem Zustand eine käfigartige Anordnung zur Verfügung gestellt.

Durch den weiteren Stand der Technik nach der DE 10 2004 059 245 B3 ist ein Transportgerät für hochbauendes Transportgut bekannt geworden. Dabei ist auf jeder Seite eines Fahrgestells ein Querriegel vorgesehen, mit dessen Hilfe Fußstücke miteinander verbunden sind. Der Querriegel lässt sich mindestens an einer Seite des Fahrgestells lösen.

Die fraglichen Rollbehälter werden typischerweise entweder von Bedienpersonal manuell hin- und hergeschoben oder beispielsweise mit Förderelementen transportiert. Bei diesen Förderelementen kann es sich um Flurförderfahrzeuge, wie beispielsweise Gabelstapler, handeln. Der Transport mit Hilfe der Flurförderfahrzeuge erfolgt dabei derart, dass das betreffende Flurförderfahrzeug mit seinen Gabelzinken unter die beiden U-Schenkel der U-förmigen Basis fährt, also quer zur Längserstreckung der sich gegenüberliegenden beiden Seitenwände.

Neben dieser Möglichkeit des Transportes des bekannten Rollbehälters in seiner Gebrauchslage durch quer zur Längserstreckung der Seitenwände die Basis untergreifende Gabelzinken werden heutzutage zunehmend automatisierte Förderelemente in der Praxis eingesetzt. Außerdem ergibt sich oftmals die zusätzliche Anforderung, den betreffenden Rollbehälter nicht quer zur Längserstreckung der Seitenwände zu unterfahren, sondern den Rollbehälter in Längsrichtung mit einem entsprechenden Förderelement aufnehmen zu können. Das führt bei den bekannten Rollbehältern, von denen die Erfindung ausgeht, dazu, dass der Boden bzw. die Bodenplatte hochklappen kann und der Rollbehälter insgesamt kippt. Bisher existieren an dieser Stelle keine überzeugenden Lösungen, um dieses Problem zu beherrschen. Hier setzt die Erfindung ein.

Der Erfindung liegt das technische Problem zugrunde, einen derartigen Rollbehälter so weiterzuentwickeln, dass ein maschineller Transport mit Hilfe von beispielsweise Förderelementen insbesondere in seiner Gebrauchslage sowohl in Quer- als auch Längsrichtung problemlos möglich ist.

Zur Lösung dieser technischen Problemstellung schlägt die Erfindung gemäß Anspruch 1 bei einem gattungsgemäßen Rollbehälter vor, dass eine die U-förmige Basis wahlweise schließende und öffnende Verbindungsstange zwischen den U-Schenkeln vorgesehen ist, welche als an einen U-Schenkel drehbar angeschlossene Pendelstange ausgebildet ist, und dass die Pendelstange einen Verlängerungssteg aufweist, welcher bis zu einer von der Unterseite der Basis aufgespannten Ebene reicht, wobei der Verlängerungssteg und die Unterseite der Basis eine Aufnahmefläche für ein Förderelement definieren. Bevorzugte Ausführungsbeispiele sind in den abhängigen Ansprüchen definiert.

Mit Hilfe der Verbindungsstange wird folglich die U-förmige Basis wahlweise geschlossen und geöffnet. In geöffnetem Zustand und folglich der Nestlage des Rollbehälters sowie der Bodenplatte lassen sich die jeweiligen Rollbehälter nach wie vor und problemlos ineinanderschieben, "nesten", wie dies im zuvor bereits referierten Stand der Technik nach der DE 20 2014 105 450 U1 oder auch der EP 2 597 011 A1 im Detail beschrieben wird. Dagegen korrespondiert die Gebrauchslage dazu, dass die Verbindungsstange die U-förmige Basis schließt. Zu diesem Zweck erstreckt sich die Verbindungsstange im Allgemeinen zwischen den jeweiligen Enden der U-Schenkel. Außerdem bewegt sich die Verbindungsstange hierbei in der von der U-förmigen Basis aufgespannten (meistens horizontalen) Ebene.

Auf diese Weise definieren die U-förmige Basis und die Verbindungsstange insgesamt ein geschlossenes und meistens trapezförmiges Viereck. Das Viereck aus der U-förmigen Basis und der Verbindungsstange spannt seinerseits eine Ebene auf, die als (regelmäßig horizontal orientierte) Aufnahmefläche für ein Förderelement fungieren kann. Das heißt, die fragliche Aufnahmefläche kann von beispielsweise einem Greifer, Gabelzinken oder vergleichbaren Förderelementen untergriffen werden, und zwar sowohl in Längs- als auch Querrichtung. Dagegen lassen sich die bekannten gattungsgemäßen Rollbehälter nach der DE 20 2014 105 450 U1 lediglich in ihrer Gebrauchslage in Querrichtung im Vergleich zur Längserstreckung der Seitenwände transportieren, aber nicht in Längsrichtung. Auf diese Weise ist es insbesondere für einen automatisierten Transport des erfindungsgemäßen Rollbehälters nicht (mehr) erforderlich, für eine bestimmte Ausrichtung des Rollbehälters zu sorgen. Vielmehr stellt die mit Hilfe der U-förmigen Basis und der Verbindungsstange realisierte Aufnahmefläche für das Förderelement sicher, dass der erfindungsgemäße Rollbehälter gleichsam richtungsunabhängig sowohl in Quer- als auch in Längsrichtung mit Hilfe des Förderelementes ergriffen und transportiert werden kann. Hierin sind die wesentlichen Vorteile zu sehen. Erfindungsgemäß ist die Verbindungsstange als an einen U-Schenkel drehbar angeschlossene Pendelstange ausgebildet.

Meistens ist die Pendelstange drehbar an ein Ende des fraglichen U-Schenkels angeschlossen. Mit dem anderen U-Schenkel geht die Pendelstange im Allgemeinen eine lösbare Verbindung ein. Dies deshalb, um die Pendelstange durch Verschwenken zwischen ihrer die U-förmige Basis schließenden und zur Gebrauchslage des Rollbehälters gehörigen Position und ihrer öffnenden Stellung verschwenken zu können, die zur Nestlage des Rollbehälters korrespondiert.

Im Detail ist die Pendelstange zu diesem Zweck drehbar an eine Längsstrebe der einen Seitenwand angeschlossen. Hierbei geht die Erfindung von der Erkenntnis aus, dass die fragliche Längsstrebe größtenteils vertikal auf dem Ende des betreffenden U-Schenkels der U-förmigen Basis aufsteht. Außerdem ist die Pendelstange rastbar mit einer Längsstrebe der anderen Seitenwand verbunden. Auch diese Längsstrebe der anderen Seitenwand steht größtenteils senkrecht auf dem Ende des zugehörigen U-Schenkels der U-förmigen Basis auf. Auf diese Weise sorgt die im Allgemeinen fußseitig an die betreffende Längsstrebe drehbar angeschlossene Pendelstange wunschgemäß dafür, dass die U-förmige Basis geöffnet und geschlossen wird, nämlich über die fußseitig der betreffenden Längsstrebe hin und her schwenkbare Pendelstange.

Die beiden durch die Pendelstange wahlweise miteinander verbindbaren Längsstreben definieren im Allgemeinen zugleich die jeweiligen vertikalen Achsen für die hieran schwenkbar gelagerten Seitenwände. Außerdem kann die Pendelstange in ihrem die U-förmige Basis schließenden Zustand und folglich der Gebrauchslage des Rollbehälters als Auflager für die oberhalb der Basis angeordnete Bodenplatte fungieren. Die Bodenplatte ist meistens drehbar an einen unteren Rand bzw. eine untere Querstrebe der zugehörigen Seitenwand angeschlossen und liegt mit Auflagerbügeln an einer unteren Querstrebe der gegenüberliegenden Seitenwand auf. Zusätzlich kann in diesem Zusammenhang die etwas oberhalb der U-förmigen Basis angeordnete Pendelstange als Auflager für die ansonsten oberhalb der Basis angeordnete Bodenplatte fungieren.

Die Pendelstange ist darüber hinaus erfindungsgemäß mit dem Verlängerungssteg ausgerüstet. Der Verlängerungssteg reicht bis zu einer von der Unterseite der U-förmigen Basis aufgespannten Ebene. Auf diese Weise definieren der Verlängerungssteg und die Unterseite der Basis die zuvor bereits angesprochene Aufnahmefläche für das Förderelement. Diese Aufnahmefläche ist randseitig geschlossen, weshalb das Förderelement sowohl in Längs- als auch Querrichtung den erfindungsgemäßen Rollbehälter ergreifen und transportieren kann, im Gegensatz zum gattungsbildenden Stand der Technik nach der DE 20 2014 105 450 U1, welcher lediglich einen Transport in der Gebrauchslage in Querrichtung im Vergleich zur Längserstreckung der Seitenwände zulässt.

Im Ergebnis wird ein Rollbehälter zur Verfügung gestellt, der einen universellen Transport ermöglicht und sich folglich für automatisierte Förderungen und Transporte insbesondere im Logistikbereich eignet. Darüber hinaus ist der erfindungsgemäße Rollbehälter unverändert mit dem Vorteil verbunden, dass er neben der eigentlichen Gebrauchslage mit auf der Bodenplatte aufliegenden Gegenständen in die Nestlage gleichsam automatisch überführt werden kann, in welcher mehrere gleichaufgebaute Rollbehälter problemlos ineinandergeschoben und platzsparend aufbewahrt werden können. Das alles gelingt unter Berücksichtigung eines kostengünstigen und zugleich stabilen Aufbaus. Hierin sind die wesentlichen Vorteile zu sehen.

Im Folgenden wir die Erfindung anhand einer lediglich ein Ausführungsbeispiel darstellenden Zeichnung näher erläutert; es zeigen:
- Fig. 1: den erfindungsgemäßen Rollbehälter in einer perspektivischen Übersicht,
- Fig. 2: den Gegenstand nach Fig. 1 in Nestlage und unterschiedliche angedeutete Positionen der Pendelstange und
- Fig. 3: mehrere der erfindungsgemäßen Rollbehälter bei einem Nestvorgang in Nestlage.

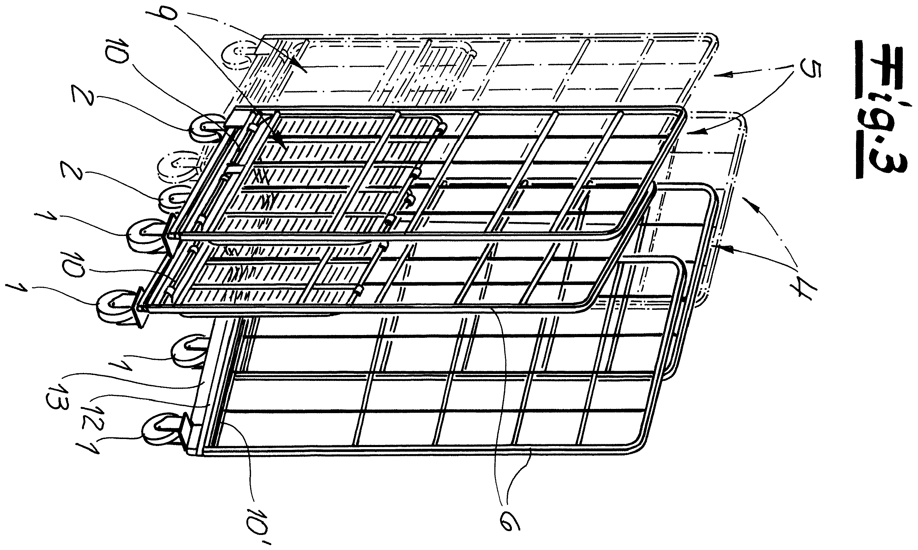

In den Figuren ist ein Rollbehälter bzw. Rollcontainer dargestellt. Dieser verfügt zunächst einmal über eine auf drehbaren Rollen 1, 2 gelagerte U-förmige Basis 3. Die U-förmige Basis 3 verfügt über U-Schenkel 3a sowie eine die beiden U-Schenkel 3a verbindende U-Basis 3b. Man erkennt, dass die U-Schenkel 3a schräg an die U-Basis 3b angeschlossen sind, und zwar in der Art eines sogenannten "A-Frame", um in Nestlage befindliche Rollcontainer entsprechend der Darstellung in der Fig. 3 ineinanderschieben zu können. Das ist im Detail in der gattungsbildenden DE 20 2014 105 450 U1 beschrieben. Ergänzend sei auf die ebenfalls in der Beschreibungseinleitung bereits gewürdigte EP 2 597 011 A1 hingewiesen. Die Basis 3 ist überwiegend horizontal orientiert.

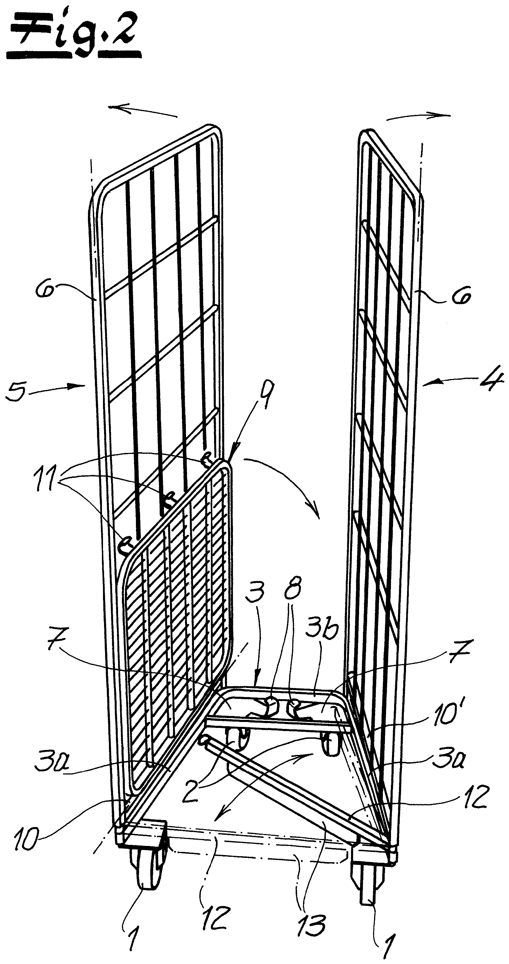

Zum grundsätzlichen Aufbau des Rollbehälters gehört ein auf der Basis 3 angeordnetes sowie größtenteils senkrecht verlaufendes Gitterwandgestell 4, 5, welches sich nach dem Ausführungsbeispiel aus zwei sich gegenüberliegenden Seitenwänden 4, 5 zusammensetzt, die jeweils als Metallgeflecht ausgebildet sind. Tatsächlich erkennt man eine rechte Seitenwand 4 und eine linke Seitenwand 5. Die beiden Seitenwände 4, 5 sind um jeweils eine im Wesentlichen vertikale Achse 6 schwenkbar ausgebildet. Die Schwenkbarkeit ist dabei insbesondere in der Fig. 2 durch Pfeile angedeutet. In der Fig. 2 befindet sich der erfindungsgemäße Rollbehälter in seiner Nestlage, in welcher mehrere Rollbehälter entsprechend der Darstellung gemäß der Fig. 3 ineinandergeschoben werden können.

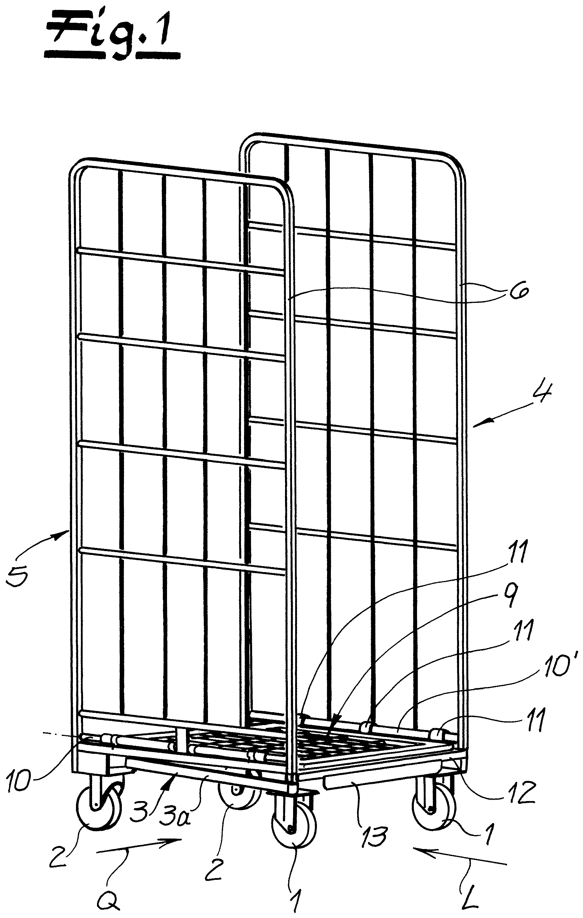

Die vertikale Achse 6 wird im Ausführungsbeispiel von einer in Blickrichtung auf den in Nestlage nach der Fig. 2 geöffneten Rollcontainer jeweils vorderen Längsstrebe 6 der zugehörigen Seitenwand 4, 5 definiert. Um den in der Nestlage befindlichen Rollbehälter nach der Fig. 2 in die Gebrauchslage entsprechend der Fig. 1 zu überführen, werden die beiden Seitenwände 4, 5 um ihre zugehörige vertikale Achse 6 mit ihren Enden nach außen geschwenkt, wie dies entsprechende Pfeile in der Fig. 2 andeuten. Jeweilige die Rollen 2 tragende Ausleger 7 mit in der Fig. 2 zu erkennenden hochstehenden Bügelanschlägen 8 sorgen für die Begrenzung der Schwenkbewegung der betreffenden Seitenwand 4, 5 und für ihre lösbare Festlegung an der U-förmigen Basis 3 in der Gebrauchslage nach der Fig. 1. Jetzt kann eine Bodenplatte 9 heruntergeschwenkt und darauf abgelegte Gegenstände für den Transport aufnehmen.

Die Bodenplatte 9 ist ihrerseits um eine größtenteils horizontale Schwenkachse 10 klappbar ausgebildet. Nach dem Ausführungsbeispiel wird die horizontale Schwenkachse 10 für die Bodenplatte 9 durch eine untere Querstrebe 10 an der linken Seitenwand 5 definiert. Die Bodenplatte 9 wird durch Federkraft mit Hilfe einer nicht explizit dargestellten Feder beaufschlagt. Die Feder sorgt dafür, dass die Bodenplatte 9 ihre größtenteils aufrechte und in der Fig. 2 dargestellte Nestlage ohne Beaufschlagung einnimmt.

Um die Bodenplatte 9 in die in der Fig. 1 dargestellte Gebrauchslage gegen Federkraft zu überführen, muss die Bodenplatte 9 um ihre Schwenkachse 10 ausgehend von der Nestlage in der Fig. 2 im Uhrzeigersinn verschwenkt werden. Und zwar bis Auflagerbügel 11 an der Bodenplatte 9 an der der Schwenkachse 10 gegenüberliegenden Seite auf einer korrespondierenden Querstrebe 10' der rechten Seitenwand 4 zu liegen kommen. Damit diese Gebrauchslage des Rollbehälters und der Bodenplatte 9 beibehalten wird, ist es erforderlich, auf der Bodenplatte 9 Gegenstände abzulegen. Jetzt kann der Rollbehälter beispielsweise von einer Person hin- und hergeschoben werden. Dazu sind die beiden Rollen 1 nach dem Ausführungsbeispiel als feststehende Bockrollen 1 ausgebildet. Bei den weiteren Rollen 2 handelt es sich demgegenüber um Lenkrollen 2. Selbstverständlich können insgesamt auch vier Lenkrollen unterseitig an die Basis 3 angeschlossen sein. Das ist hier jedoch nicht dargestellt.

Von besonderer Bedeutung für die Erfindung ist nun eine insbesondere in der Fig. 2 zu erkennende Verbindungsstange 12. Die Verbindungsstange 12 kann in eine die U-förmige Basis 3 wahlweise schließende und öffnende Position zwischen die beiden U-Schenkel 3a verbracht werden. Nach dem Ausführungsbeispiel ist die Auslegung so getroffen, dass die fragliche Verbindungsstange 12 die beiden U-Schenkel 3a in ihrer schließenden Position endseitig mechanisch miteinander verbindet. Diese schließende Position der Verbindungsstange 12 korrespondiert zur Gebrauchslage des Rollbehälters nach der Fig. 1. Soll jedoch der Rollbehälter seine Nestlage entsprechend der Fig. 2 einnehmen, so muss die Verbindungsstange 12 in ihre die U-förmige Basis 3 öffnende Position entsprechend der Fig. 2 überführt werden.

Anhand der Fig. 2 und der angedeuteten verschiedenen Positionen der Verbindungsstange 12 erkennt man, dass es sich bei der Verbindungsstange 12 um eine an einen U-Schenkel 3a drehbar angeschlossene Pendelstange 12 handelt. Nach dem Ausführungsbeispiel ist die Verbindungsstange bzw. Pendelstange 12 drehbar an den rechten U-Schenkel 3a der U-förmigen Basis 3 angeschlossen. Demgegenüber geht die Pendelstange 12 eine lösbare Verbindung mit dem anderen linken U-Schenkel 3a ein.

Um dies im Detail zu realisieren, ist die fragliche Pendelstange 12 drehbar an eine Längsstrebe 6 der betreffenden Seitenwand 4, 5 angeschlossen. Bei der fraglichen Längsstrebe 6 handelt es sich um diejenige Längsstrebe 6 der betreffenden Seitenwand 4, 5, die zugleich auch die vertikale Achse 6 für die demgegenüber schwenkbaren Seitenwände 4, 5 definiert. Das gilt selbstverständlich nur beispielhaft und ist keineswegs einschränkend gemeint.

Die Pendelstange 12 ist jeweils fußseitig an die zugehörige Längsstrebe 6 der betreffenden Seitenwand 4, 5 angeschlossen. Dabei fungiert die Längsstrebe 6 der rechten Seitenwand 4 als gleichsam Drehlager für die Pendelstange 12, wohingegen die Pendelstange 12 rastbar mit der Längsstrebe 6 der anderen gegenüberliegenden linken Seitenwand 5 gekoppelt werden kann. Tatsächlich lässt sich die Pendelstange 12 mit der betreffenden Längsstrebe 6 der anderen linken Seitenwand 5 verrasten. Dadurch kann die Pendelstange 12 problemlos die zur Gebrauchslage nach der Fig. 1 gehörige schließende Position der Basis 3 ebenso wie die zur Nestlage nach der Fig. 2 gehörige öffnende Position gegenüber der Basis 3 einnehmen.

Die Pendelstange 12 fungiert darüber hinaus in ihrem die U-förmige Basis 3 schließenden Zustand als Auflager für die oberhalb der Basis 3 angeordnete Bodenplatte 9. Das erkennt man insbesondere anhand der Fig. 1. Grundsätzlich ist es aber auch möglich, dass die Pendelstange 12 nicht die Funktion eines zusätzlichen Auflagers für die Bodenplatte 9 übernimmt, weil die Bodenplatte 9 ohnehin durch einerseits die horizontale Schwenkachse 10 und andererseits die Auflagerbügel 11 ausreichend gesichert ist.

Schließlich erkennt man insbesondere noch anhand der Fig. 2, dass die Pendelstange 12 mit einem Verlängerungssteg 13 ausgerüstet ist. Der Verlängerungssteg 13 reicht nach dem Ausführungsbeispiel bis zu einer von der Unterseite der Basis 3 aufgespannten Ebene. Auf diese Weise können der fragliche Verlängerungssteg 13 und die Unterseite der Basis 3 insgesamt eine Aufnahmefläche definieren, die von einem Förderelement, beispielsweise einem Flurförderzeug und zugehörigen Gabelzinken, unterfahren werden kann.

Der erfindungsgemäße Rollbehälter lässt sich auf diese Weise problemlos sowohl in Querrichtung Q im Vergleich zur Längserstreckung der beiden Seitenwände 4, 5 unterfahren, wie dies die Fig. 1 andeutet und außerdem in Längsrichtung L, wie dies ebenfalls die Fig. 1 durch einen entsprechenden Pfeil transparent macht. Dadurch kann der Rollbehälter gleichsam unabhängig von seiner Position problemlos von dem fraglichen Förderelement unterfahren und transportiert werden. Das war bei den bisherigen Lösungen nicht möglich.

### Bezugszeichenliste

- **1**: **Rollen / Blockrollen**
- 1**,** 2: **drehbare Rollen**
- **2**: **Rollen / Lenkrollen**
- **3**: **Basis / U-förmige Basis**
- **3a**: **U-Schenkel**
- **3b**: **U-Basis**
- **4**: **rechte Seitenwand**
- **4, 5**: **Gitterwandgestell / Seitenwände**
- **5**: **linke Seitenwand**
- **6**: **vertikale Achse / Längsstrebe**
- **7**: **Ausleger**
- **8**: **Bügelanschläge**
- **9**: **Bodenplatte**
- **10**: **horizontale Schwenkachse / untere Querstrebe**
- **10'**: **untere Querstrebe**
- **11**: **Auflagerbügel**
- **12**: **Verbindungsstange / Pendelstange**
- **13**: **Verlängerungssteg**
- **L**: **Längsrichtung**
- **Q**: **Querrichtung**

## Patentansprüche

1. Rollbehälter, insbesondere Rollcontainer, mit einer auf drehbaren Rollen (1, 2) gelagerten U-förmigen Basis (3) mit U-Schenkeln (3a), ferner mit einem auf der Basis (3) angeordneten Gitterwandgestell (4, 5) aus zumindest zwei sich gegenüberliegenden sowie um jeweils eine im wesentlichen vertikale Achse (6) schwenkbaren Seitenwänden (4, 5), und mit einer um eine größtenteils horizontale Schwenkachse (10) klappbaren Bodenplatte (9), wobei die Bodenplatte (9) gegen Federkraft in eine größtenteils horizontale Gebrauchslage oberhalb der Basis (3) sowie durch Federkraft in eine größtenteils aufrechte Nestlage schwenkbar ausgebildet ist,
**dadurch gekennzeichnet, dass**
eine die U-förmige Basis (3) wahlweise schließende und öffnende Verbindungsstange (12) zwischen den U-Schenkeln (3a) vorgesehen ist, welche als an einen U-Schenkel (3a) drehbar angeschlossene Pendelstange (12) ausgebildet ist, und dass
die Pendelstange (12) einen Verlängerungssteg (13) aufweist, welcher bis zu einer von der Unterseite der Basis (3) aufgespannten Ebene reicht, wobei
der Verlängerungssteg (13) und die Unterseite der Basis (3) eine Aufnahmefläche für ein Förderelement definieren.

2. Rollbehälter nach Anspruch 1, **dadurch gekennzeichnet, dass** die Pendelstange (12) lösbar mit dem anderen U-Schenkel (3a) verbunden ist.

3. Rollbehälter nach Anspruch 1 oder 2, **dadurch gekennzeichnet, dass** die Pendelstange (12) drehbar an eine Längsstrebe (6) der einen Seitenwand (4, 5) angeschlossen ist.

4. Rollbehälter nach einem der Ansprüche 1 bis 3, **dadurch gekennzeichnet, dass** die Pendelstange (12) rastbar mit einer Längsstrebe (6) der anderen Seitenwand (4, 5) verbunden ist.

5. Rollbehälter nach Anspruch 3 oder 4, **dadurch gekennzeichnet, dass** die beiden durch die Pendelstange (12) wahlweise verbindbaren Längsstreben (6) zugleich die jeweiligen Achsen (6) für die schwenkbaren Seitenwände (4, 5) definieren.

6. Rollbehälter nach einem der Ansprüche 1 bis 5, **dadurch gekennzeichnet, dass** die Pendelstange (12) in die U-förmige Basis (3) schließendem Zustand als Auflager für die oberhalb der Basis (3) angeordnete Bodenplatte (9) fungiert.

## Claims

1. A roll container, in particular roll cage, having a U-shaped base (3) which is mounted on rotatable rollers (1, 2) and has U-sides (3a), further having a grating wall frame (4, 5) which is arranged on the base (3) and consists of at least two mutually opposing side walls (4, 5) which can each be pivoted about a substantially vertical axis (6), and having a baseplate (9) which can be folded about a largely horizontal pivot axis (10), the baseplate (9) being pivotable counter to spring force into a largely horizontal use position above the base (3) and by spring force into a largely upright nested position,
**characterised in that**
a connection rod (12), which closes and opens the U-shaped base (3) as desired, is provided between the U-sides (3a) and is designed as a swing rod (12) which is rotatably attached to one U-side (3a), and that
the swing rod (12) has an extension piece (13) which extends as far as a plane spanned by the underside of the base (3), wherein
the extension piece (13) and the underside of the base (3) define a receiving face for a conveying element.

2. The roll container according to Claim 1, **characterised in that** the swing rod (12) is connected detachably to the other U-side (3a).

3. The roll container according to Claim 1 or 2, **characterised in that** the swing rod (12) is attached rotatably to a longitudinal strut (6) of one side wall (4, 5).

4. The roll container according to any one of Claims 1 to 3, **characterised in that** the swing rod (12) is connected latchably to a longitudinal strut (6) of the other side wall (4, 5).

5. The roll container according to Claim 3 or 4, **characterised in that** the two longitudinal struts (6) which can be connected as desired by the swing rod (12) at the same time define the respective axes (6) for the pivotable side walls (4, 5).

6. The roll container according to any one of Claims 1 to 5, **characterised in that** when in the state closing the U-shaped base (3), the swing rod (12) acts as a rest for the baseplate (9) arranged above the base (3).

## Revendications

1. Contenant roulant, notamment conteneur roulant, doté d'une base (3) en forme de U, logée sur des roulettes (1, 2) rotatives, comprenant des branches du U (3a), doté par ailleurs d'un châssis à parois grillagées (4, 5) placé sur la base (3), composé d'au moins deux parois latérales (4, 5) mutuellement opposées et susceptibles de pivoter autour de respectivement un axe (6) sensiblement vertical, et doté d'une plaque de fond inférieur (9) rabattable autour d'un axe de pivotement (10) majoritairement horizontal, la plaque de fond inférieur (9) étant conçue en étant susceptible de pivoter à l'encontre d'une force élastique dans une position d'utilisation majoritairement horizontale au-dessus de la base (3) et par force élastique dans une position de repos majoritairement debout,
**caractérisé en ce qu'**
une barre de liaison (12), laquelle est conçue sous la forme d'une barre pendulaire (12), raccordée en rotation sur une branche du U (3a), fermant ou ouvrant sélectivement la base (3) en forme de U est prévue entre les branches du U (3a), et **en ce que**
la barre pendulaire (12) comporte une barrette de rallonge (13), qui arrive jusqu'à un plan dressé par la face inférieure de la base (3), la barrette de rallonge (13) et la face inférieure de la base (3) définissant une surface réceptrice pour un élément de convoyage.

2. Contenant roulant selon la revendication 1, **caractérisé en ce que** la barre pendulaire (12) est reliée de manière amovible avec l'autre branche du U (3a) .

3. Contenant roulant selon la revendication 1 ou 2, **caractérisé en ce que** la barre pendulaire (12) est raccordée en rotation à un longeron (6) de l'une paroi latérale (4, 5).

4. Contenant roulant selon l'une quelconque des revendications 1 à 3, **caractérisé en ce que** la barre pendulaire (12) est reliée de manière enclenchable avec un longeron (6) de l'autre paroi latérale (4, 5).

5. Contenant roulant selon la revendication 3 ou 4, **caractérisé en ce que** les deux longerons (6) susceptibles d'être reliés sélectivement par la barre pendulaire (12) définissent simultanément les axes respectifs (6) pour les parois latérales (4, 5) pivotantes.

6. Contenant roulant selon l'une quelconque des revendications 1 à 5, **caractérisé en ce que** dans la position fermant la base (3) en forme de U, la barre pendulaire (12) fait office de support pour la plaque de fond (9) placée au-dessus de la base (3).
